(19) Europäisches Patentamt
European Patent Office
Office européen des brevets

(11) **EP 2 025 506 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(51) Int Cl.:
*B32B 5/16* *(2006.01)*     *B32B 27/32* *(2006.01)*
*B41N 6/02* *(2006.01)*     *C09J 7/02* *(2006.01)*

(21) Anmeldenummer: **08161618.7**

(22) Anmeldetag: **01.08.2008**

(54) **Klebeband mit einem Träger aus zumindest einer Schaumschicht**

Adhesive band with a carrier comprising at least one foam layer

Bande adhésive dotée d'un support composé d'au moins une couche de caoutchouc

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.08.2007 DE 102007038238**

(43) Veröffentlichungstag der Anmeldung:
**18.02.2009 Patentblatt 2009/08**

(73) Patentinhaber: **TESA SE**
**20253 Hamburg (DE)**

(72) Erfinder:
• **Behrens, Dr. Nicole**
**20257, Hamburg (DE)**
• **Müssig, Dr. Bernhard**
**21218, Seevetal (DE)**

(56) Entgegenhaltungen:
**EP-A- 0 129 809     EP-A- 0 491 253**
**WO-A-2007/011728     US-A1- 2007 167 315**

**Beschreibung**

Die Erfindung betrifft ein Klebeband aus einem Träger und einer zumindest einseitig aufgebrachten Klebemassenschicht, wobei der Träger zumindest eine Schaumschicht enthält.

Klischee-Montagebänder mit Schaumfolienträger sind seit langem bekannt und handelsüblich. Jedoch ist nach wie vor die Herstellung von Montagebändern mit geringer Dickenschwankung ein grundlegendes Problem, insbesondere bei Dickentoleranzen unter ± 10 %. Geringe Abweichungen der Dicke vom Sollwert sowie geringe Gesamtdicken sind in vielen Einsatzbereichen von doppelseitigen Schaumstoffklebebändern erwünscht beziehungsweise notwendig, insbesondere auch in der Druckindustrie. Beim Flexodruckverfahren ist es zum Beispiel vorteilhaft, das Polymerdruckklischee mittels eines doppelseitigen Klebebandes auf den Druckzylinder zu montieren, wenn das Klebeband eine geeignete Rückstellkraft und geringe Dickenschwankungen aufweist. Bleibt die Rückstellkraft auch bei wiederholter Kompression der Schaumfolie konstant, so hat die Schaumfolie ein vorteilhaftes Rückstellvermögen und wird für den Einsatz für diese Anwendung bevorzugt. Die Druckqualität kann auf diese Weise nämlich erheblich gesteigert werden. Ein großes Problem bei der Herstellung von Klischee-Montagebändern ist bisher die schlechte Verfügbarkeit von Schaumbahnen mit geeignetem Rückstellvermögen.

Nach Beendigung des Druckvorganges muss sich das Klebeband möglichst rückstandsfrei sowohl vom Druckzylinder als auch vom Klischee wieder ablösen lassen, was eine hinreichende Reißfestigkeit voraussetzt. Bislang werden für diesen Anwendungsbereich Klebebänder auf der Basis von veredelten Polyurethanschäumen (Firma Mayser, Lindenberg) oder Polyethylen- oder Polyethylenvinylacetatmischpolymerisatschäumen (Firma Alveo, Luzern) eingesetzt. Die eingesetzten Schaumfolien auf PE-Basis besitzen gegenüber den oben genannten auf PU-Basis den Vorteil, dass sie in wesentlich niedrigeren Stauchhärten erhältlich sind. Auch in Bezug auf die Verschlechterung des Rückstellverhaltens in Folge von Ermüdung des Materials nach zahlreichen Komprimierungs-Entspannungs-Zyklen sind die geschlossenzelligen PE- den offenzelligen PU-Folien überlegen.

Eine weitere Anforderung an Schaumfolien, die in Klischee-Montagebändern eingesetzt werden, ist die Temperaturstabilität. Bei Bahngeschwindigkeiten im Flexodruck von bis zu 600 m/min kann es zu einer Erwärmung des Montagebands auf ca. 40 bis 60 °C kommen. Sowohl herkömmliche PE- als auch PU-Schaumfolien zeigen bei 60 °C eine Verschlechterung des Rückstellverhaltens.

Aus der EP 0 491 253 A1 ist ein Klischee-Montageband mit einer Schaumstofffolie als Trägermaterial bekannt. Die Schaumstofffolie besteht bevorzugt aus Polyolefin, insbesondere aus Polyethylen oder einem Polyethylenmischpolymerisat, zum Beispiel mit Vinylacetat. Die Schaumstofffolie kann gereckt sein.

Eine Schaumbahn mit hohem Anteil von aus Metallocen-Katalyse gewonnenem Polyethylen sowie ein aus einer solchen Schaumbahn hergestelltes Klebeband beschreibt die EP 1 645 589 A1. Die vernetzte Schaumbahn wird hergestellt, indem ein sich thermisch zersetzendes Treibmittel und ein Polyolefin basiertes Polymer in Bahnform coextrudiert, vernetzt und schließlich geschäumt wird. Das Polymer enthält wenigstens 40 % (w/w) eines Polyethylen basierten Polymers, das durch Metallocen-Katalyse mittels eines tetravalenten Übergangsmetalls als Katalysator hergestellt wird. Ein Schaum gemäß EP 1 645 589 A1 zeigt trotz Vernetzung besonders bei erhöhten Temperaturen Schwächen im Rückstellvermögen. Ein konstant hohes Rückstellvermögen ist aber zum Beispiel bei der Verwendung in einem Klebeband in der Druckindustrie zwingend notwendig.

Ein Ethylen-multi-Blockcopolymer beschreibt die WO 2005/090427 A1. Dieses multi-Blockcopolymer wird aus der Polymerisation zweier Olefine in der Anwesenheit von zwei Polymerisations-Katalysatoren unterschiedlicher Selektivität bezüglich der beiden Olefine sowie eines Kettenübertragungsreagenzes ("chain shuttling agent") erhalten. Das resultierende multi-Blockcopolymer zeigt elastomeres Verhalten bei deutlich höheren Temperaturen als homogene Copolymere aus identischen Monomeren.

Die WO 2005/090427 A1 beschreibt auch die Herstellung eines Schaums im In-Mold-Verfahren aus dem Ethylen-multi-Blockcopolymer. Das Produkt der Schäumung ist aufgrund des Verfahrens und der resultierenden Eigenschaften nicht geeignet für einen Einsatz als Schaumfolie in einem Klischee-Montageband. Die benötigte Dicke, die niedrige Dickentoleranz sowie die durch die Zellenform und -größe bedingten mechanischen Eigenschaften können in diesem Verfahren nicht erreicht werden. Aus diesen Gründen ist der Einsatz von Polyolefin-basierten unvernetzten Schaumfolien oder Schaumfolien, die simultan chemisch vernetzt und geschäumt wurden, für Klischee-Montagebänder nicht möglich.

Die Aufgabe der Erfindung ist es, ein Klebeband zur Verfügung zu stellen, das bei erhöhten Temperaturen ein konstant hohes Rückstellvermögen aufweist und das somit insbesondere als Klischee-Montageband Verwendung finden kann.

Gelöst wird diese Aufgabe durch ein Klebeband, wie es im Hauptanspruch dargelegt ist. Gegenstand der Unteransprüche sind vorteilhafte Fortbildungen des Erfindungsgegenstandes. Des Weiteren betrifft die Erfindung Verwendungsvorschläge des erfindungsgemäßen Klebebands.

Demgemäß betrifft die Erfindung ein Klebeband aus einem Träger und einer zumindest einseitig auf dem Träger aufgebrachten Klebemassenschicht, wobei der Träger zumindest eine Schaumschicht aus einem Polyolefin basierten Polymer aufweist.

Das Polyolefin basierte Polymer enthält ein Ethylen-multi-Blockcopolymer zu einem Anteil von mindestens 40 % (w/w), wobei das Ethylen-multi-Blockcopolymer besteht aus Hartsegmentblöcken, enthaltend mindestens 95 % (w/w) Ethylen und ein Comonomer, und aus Weichsegmentblöcken, enthaltend Ethylen und ein Comonomer, wobei der Anteil an Comonomer in den Weichsegmentblöcken zwischen 10 und 20 Mol-% liegt. Die Comonomere in Hart- und Weichsegment sind chemisch identisch.

Gemäß einer ersten vorteilhaften Ausführungsform der Erfindung weisen die Hartsegmentblöcke einen Kristallitschmelzpunkt von mindestens 110 °C auf.

Gemäß einer weiteren vorteilhaften Ausführungsform der Erfindung werden die Ethylen-multi-Blockcopolymere durch "chain-shuttling-Polymerisation" hergestellt.

Bei der "chain-shuttling-Polymerisation" werden zwei unterschiedliche Katalysatoren verwendet, die verschiedene Polymerstrukturen aufbauen. Durch eine Übertragung der Polymerkette von einem auf den anderen Katalysator werden multi-Blockcopolymere erhalten, die aus Segmenten mit unterschiedlicher Mikrostruktur bestehen (zum Beispiel semikristallin (hart) / amorph (weich)). Die Segmente unterscheiden sich in ihrer chemischen Struktur durch einen hohen (im Hartsegment) oder niedrigen (im Weichsegment) Anteil des Polyethylens im Polymer.

Das Comonomer, dessen Anteil im Weichsegment zwischen 10 und 20 Mol-%, bevorzugt zwischen 15 und 17 Mol-%, liegt, ist 1-Octen. Der Einsatz von Propylen, 1-Buten, 1-Penten, 4-Methyl-1-Penten, 1-Hexen, 1-Hepten, 1-Decen, Vinylacetat, 1-Methyl-Vinylacetat und ähnlicher Monomere ist ebenfalls möglich.

Durch die Copolymerisation des Comonomers werden amorphe Segmente geringer Dichte erhalten.

Eingesetzt wird im Prozess ein Katalysator 1, der aus einem Gemisch Ethen/höheres $\alpha$-Olefin (1-Octen) ein hartes, semikristallines Polyolefin produziert, also eine hohe Einbaurate für Ethen und eine geringe für 1-Octen aufweist. Weiterhin wird ein Katalysator 2 verwendet, der eine gesteigerte 1-Octen-Selektivität besitzt, der aus dem gleichen Gemisch ein amorphes weiches Polymer synthetisiert.

Neben den Katalysatoren 1 und 2 liegt außerdem ein Kettenübertragungsreagenz vor, das einen reversiblen Transfer der Polymerketten zwischen den Katalysatoren gewährleistet. Als Produkt wird das oben beschriebene multi-Blockcopolymer mit einstellbarem Anteil an Hart- und Weichsegmenten erhalten.

Als Katalysator 1 und Katalysator 2 können zum Beispiel [N-(2,6-di(1-methylethyl)phenyl)amido](2-isopropylphenyl)($\alpha$-naphthalen-2-diyl(6-pyridin-2-diyl)methane)]hafnium dimethyl und 1,2-bis(3,5-di-t-butylphenylene)(1-(N-(1-methylethyl) immino)methyl)(2-oxoyl) zirconium dibenzyl oder [N-(2,6-di(1-methylethyl)phenyl)amido](2-isopropylphenyl)(a-naphthalen-2-diyl(6-pyridin-2-diyl)methane)]hafnium dimethyl und 1,2-bis-(3,5-di-t-butylphenylene)(1-(N-(2-methylcyclohexyl)-immino)methyl)(2-oxoyl) zirconium dibenzyl, jeweils zum Beispiel mit Diethylzink als Kettenübertragungsreagenz eingesetzt werden.

Vor allem bei der Verwendung von Klebebändern zur Verklebung von Druckklischees in der Druckindustrie ist der Einsatz von Schaumträgern mit geringer und exakter Dicke gefordert. Um Polyolefin-Schäume mit diesen Eigenschaften zu erhalten, hat sich besonders die Extrusion einer Schaumbahn, deren Vernetzung und anschließende Schäumung bewährt. Vorteilhaft ist besonders die Coextrusion des physikalisch vernetzten Ethylen-multi-Blockcopolymers und eines chemischen Treibmittels zu einer expandierbaren Folienbahn, Expansion dieser Folienbahn, wobei der Grad der Vernetzung der vernetzten Ethylen-multi-Blockcopolymer-basierten Schaumbahn 5 bis 60 % (w/w), bevorzugt 5 bis 40 % (w/w), beträgt.

Der Vernetzungsgrad der vernetzten Polyolefin-basierten Polymer-Schaumbahn wird folgendermaßen bestimmt. Das Gewicht von ungefähr 100 mg einer Probe der Schaumbahn wird exakt bestimmt und geht als Gewicht A (in mg) in die Auswertung ein. Dieselbe Probe wird in Xylol (30 mL) gegeben und für 24 Stunden bei 120 °C darin gelagert. Anschließend werden die nicht-löslichen Bestandteile abgetrennt, getrocknet und gewogen. Dieser Messwert wird als Gewicht B (in mg) definiert. Aus den erhaltenen Werten wird der Vernetzungsgrad (in % (w/w)) folgendermaßen berechnet:

$$\text{Vernetzungsgrad} = \frac{B}{A} \cdot 100$$

Zweckmäßig ist weiterhin ein Anteil des Ethylen-multi-Blockcopolymers im Polyolefin basierten Polymer der Schaumschicht von mindestens 40 % (w/w), bevorzugt ein Anteil von mindestens 70 % (w/w). Ein Anteil von mindestens 40 % (w/w) ist notwendig, um die durch den Einsatz des multi-Blockcopolymers erreichbaren Vorteile ausnutzen zu können. So kommt es während der im Herstellprozess nötigen Verstreckprozesse aufgrund des Rückstellvermögens des multi-Blockcopolymers nicht zu einem dauerhaften Kollabieren der Zellen des Schaums.

Der Schaum im erfindungsgemäßen Klebeband besitzt gemäß einer weiteren vorteilhaften Weiterbildung der Erfindung ein Längenverhältnis der Zellen (durchschnittlicher Zelldurchmesser in MD/durchschnittlicher Zelldurchmesser in CD) von 0,25 bis 1 und/oder ein Längenverhältnis der Zellen (durchschnittlicher Zelldurchmesser in CD/durchschnittlicher Zelldurchmesser in VD) von 2 bis 18. Besonders bevorzugt ist die Einhaltung beider Parameter, das heißt ein Schaum mit einem Längenverhältnis der Zellen (durchschnittlicher Zelldurchmesser in MD/durchschnittlicher Zelldurchmesser in CD) von 0,25 bis 1 und gleichzeitig einem Längenverhältnis der Zellen (durchschnittlicher Zelldurchmesser in CD/durchschnittlicher Zelldurchmesser in VD) von 2 bis 18.

Gegenüber diesen Werten bevorzugt sind weiterhin ein Längenverhältnis der Zellen (durchschnittlicher Zelldurchmesser in MD/durchschnittlicher Zelldurchmesser in CD) von 0,25 bis 0,60 und/oder ein Längenverhältnis der Zellen (durchschnittlicher Zelldurchmesser in CD/durchschnittlicher Zelldurchmesser in VD) von 2,5 bis 15.

In diesem Kontext bezieht sich die Bezeichnung MD (englisch für "machine direction") auf die Extrusionsrichtung der Schaumbahn, CD ("cross direction") auf eine Richtung orthogonal zu MD und in einer Ebene mit der Oberfläche der Schaumbahn. Die Bezeichnung VD ("vertical direction") beschreibt die Richtung orthogonal zur Oberfläche der Schaumbahn.

Der durchschnittliche Zelldurchmesser in MD wird ermittelt, indem der Querschnitt des Schaums in der aus MD und VD aufgespannten Ebene in 60facher Vergrößerung photographiert wird. Die Anzahl der Zellen auf einer 15 cm langen Linie in MD (die Länge in Originalgröße der Photographie beträgt 2500 $\mu$m) wird ermittelt und der durchschnittliche Zelldurchmesser ergibt sich aus folgender Gleichung:

$$\text{Zelldurchmesser in MD } (\mu m) = 2500 \ (\mu m)/\text{Anzahl der Zellen}$$

Zur Ermittlung des Zelldurchmessers in CD wird ähnlich vorgegangen, allerdings muss von einem Querschnitt des Schaums in der aus CD und VD aufgespannten Ebene ausgegangen werden. Auch die Anzahl der Zellen wird auf einer Linie bestimmt, die in CD verläuft.

Der Zelldurchmesser in VD wird erhalten ausgehend von einer Photographie wie zur Bestimmung des Durchmessers in MD. Anschließend wird die Anzahl der Zellen entlang dreier Linien in VD und die genaue Länge dieser Linien ermittelt. Für jede einzelne Linie und die entsprechende Anzahl der Zellen wird der Zelldurchmesser entsprechend der Gleichung:

$$\text{Zelldurchmesser in VD } (\mu m) = \text{Linienlänge } (\mu m)/(60 \times \text{Anzahl der Zellen})$$

errechnet. Aus dem arithmetischen Mittel der drei erhaltenen Werte ergibt sich der durchschnittliche Zelldurchmesser in VD.

Für die Verwendung als Trägermaterial in einem Klebeband ist außerdem eine Dicke der Schaumbahn in VD zwischen 200 und 3000 $\mu$m, besonders bevorzugt zwischen 200 und 2000 $\mu$m, und eine Dichte von 30 bis 300 kg/m$^3$ vorzuziehen. Besonders Dicken im unteren Dickenbereich, das heißt, Dicken in VD zwischen 200 und 900 $\mu$m können durch die Verwendung des Ethylen-multi-Blockcopolymers bei gleichzeitig sehr niedrigen Dickentoleranzen sehr gut dargestellt werden.

Der Prozess zur Herstellung von vernetzten Polyolefin-Schaumbahnen mit geringer Dicke, wie sie für die Verwendung als Trägermaterial in einem Klebeband benötigt werden, wird im Folgenden beispielhaft beschrieben:

Ein Granulat-Gemisch mit einem Gehalt von wenigstens 40 % (w/w) eines Ethylen-multi-Blockcopolymers und eines thermisch zersetzbaren Schäumungsmittels wird in einem Extruder aufgeschmolzen und vermischt. Die Schmelze wird in Form einer Bahn extrudiert, anschließend mittels ionisierender Strahlung bis zu einem Vernetzungsgrad von 5 bis 60 % (w/w) vernetzt und dann durch Erhitzen aufgeschäumt. Nach dem Schäumungsprozess kühlt die Schaumbahn ab, wird aber anschließend wieder erwärmt, bis ein geschmolzener oder erweichter Zustand erreicht ist. In diesem Zustand wird die Schaumbahn in MD, CD oder beide Richtungen verstreckt, so dass ein Längenverhältnis der Zellen (durchschnittlicher Durchmesser in MD/durchschnittlicher Durchmesser in CD) von 0,25 bis 1 oder ein Längenverhältnis der Zellen (durchschnittlicher Durchmesser in CD/durchschnittlicher Durchmesser in VD) von 2 bis 18 entsteht.

Das thermisch zersetzbare Schäumungsmittel kann zum Beispiel Azodicarbonamid, N,N'-Dinitrosopentamethylentetramin oder p-Toluolsulfonylsemicarbazid sein. Vorteilhaft ist die Verwendung von Azodicarbonamid. Um den gewünschten Schäumungsgrad sowie geeignete mechanische Eigenschaften des Schaums zu erhalten, sollten zwischen 1 und 40 Gewichtsteilen, besser jedoch zwischen 1 und 30 Gewichtsteilen bezogen auf 100 Gewichtsteile des Polyolefin basierten Polymers eingesetzt werden.

Wenn nötig, können ein Antioxidans wie zum Beispiel 2,6-Di-t-Butyl-p-kresol, ein Schäumungshilfsmittel wie Zinkoxid, ein Nukleierungsmittel, ein thermischer Stabilisator, ein Farbstoff, ein Flammschutzmittel, ein Füllstoff und/oder ähnliche Zusatzstoffe dem Granulat-Gemisch zugesetzt werden. Die Anteile sollten vorzugsweise so gewählt werden, dass eine Verschlechterung der mechanischen Eigenschaften der Schaumbahn nicht zu beobachten ist.

Beispiele von Vernetzungsmethoden des schäumbaren Polyolefin-basierten Polymers in Bahnform schließen Bestrahlung mit ionisierender Strahlung wie zum Beispiel Elektronenstrahlen, α-Strahlen, β-Strahlen und γ-Strahlen ein, weiterhin die Coextrusion von organischen Peroxiden mit dem Granulat-Gemisch und die anschließende Erwärmung bis zur Zersetzung des organischen Peroxids und ähnliche. Beide Methoden können auch kombiniert werden.

Beispiele von geeigneten organischen Peroxiden sind 1,1-Bis(t-Butylperoxy)-3,3,5-trimethylcyclohexan, 1,1-Bis(t-Butylperoxy)cyclohexan, 2,2-Bis(t-Butylperoxy)octan, n-Butyl-4,4-bis(t-butylperoxy)valerat, Di-t-Butylperoxid, t-Butylcumylperoxid, Dicumylperoxid, α,α'-Bis(t-Butylperoxy-m-isopropyl)benzol, 2,5-Dimethyl-2,5-di(t-butylperoxy)hexan, 2,5-Dimethyl-2,5-di(t-butylperoxy)hexin-3, Benzoylperoxid, Cumylperoxy-neodecanat, t-Butylperoxybenzoat, 2,5-Dimethyl-2,5-di(benzoylperoxy)hexan, t-Butylperoxyisopropylcarbonat, t-Butylperoxyallylcarbonat und ähnliche. Der Anteil an organischem Peroxid sollte zwischen 0,1 und 3 Gewichtsteilen pro 100 Gewichtsteile des Polyolefin basierten Polymers liegen.

Die Schäumung des Polyolefin-basierten Polymers in Bahnform kann zum Beispiel durch das Erhitzen durch Heißluft, IR-Strahlung, Salzbad, Ölbad oder ähnliches erfolgen. Auch Kombinationen dieser Methoden sind möglich.

Bei der Verwendung als Trägerschicht in einem Klebeband wird auf die expandierte Schaumfolie wenigstens eine, bevorzugt zwei Klebemassenschichten aufgetragen. Bei der oder den auf der Trägerschicht angeordneten Klebemassenschicht(en) handelt es sich vorzugsweise um eine Schicht oder zwei Schichten aus Haftkleber. Gemäß Varianten ist auch eine Beschichtung mit hitzeaktivierbarer Folie oder Reaktivkleber möglich. Für doppelseitige Klebebänder können eine oder beide der Schichten haftklebend, hitzeaktivierbar oder reaktivklebend sein.

Die Träger wird für die Klebebandanwendung ein- oder beidseitig mit dem bevorzugten Haftkleber als Lösung oder Dispersion oder 100 %ig (zum Beispiel Schmelze) oder durch Coextrusion mit dem Träger beschichtet. Alternativ ist eine Beschichtung durch Transfer einer Klebemassenschicht durch Kaschieren möglich, aber im Unterschied zu herkömmlichen Schaumfolien nicht zwingend nötig. Aufgrund der vorteilhaften Hitzebeständigkeit der Schaumfolie mit hohem multi-Blockcopolymer-Anteil kann die Beschichtung mit Klebemasse auch direkt erfolgen. Die Klebeschicht(en) können durch Wärme oder energiereiche Strahlen vernetzt und erforderlichenfalls mit Trennfolie oder Trennpapier abgedeckt werden.

Vorteilhaft sind insbesondere Klebebänder bei denen die Klebemassenschicht, insbesondere Haftklebemassenschicht, eine solche auf Basis von Acrylat, Silikon, Polyurethan und Kautschuk ist (beziehungsweise im Falle doppelseitiger Klebebänder solche, bei denen beide Klebeschichten, insbesondere Haftklebeschichten, solche auf Basis der vorgenannten Verbindungen sind).

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Vorteilhaft ist eine physikalische Vorbehandlung der Trägerfolienschicht zur Verbesserung der Haftung durch Flamm- oder Coronabehandlung.

Bei Bedarf kann vor dem Aufbringen der Haftkleberschicht eine Primerschicht, insbesondere lösungsmittelfrei wie zum Beispiel durch Coextrusion, aufgebracht werden, so dass sich zwischen der Trägerfolienschicht und der Haftkleberschicht eine Primerschicht befindet.

Bei einer weiteren Ausführungsform wird das Trägermaterial doppelseitig mit einer Haftklebstoffbeschichtung versehen. Die Menge der Klebstoffschicht beträgt (auch bei der einseitigen Ausführungsform) bevorzugt jeweils 10 bis 120 g/m², vorzugsweise 25 bis 100 g/m² (gemeint ist die Menge nach einer eventuellen notwendigen Entfernung von Wasser oder Lösungsmittel; die Zahlenwerte entsprechen auch in etwa der Dicke in μm).

Der zur ein- oder beidseitigen Ausrüstung des Trägermaterials einzusetzende Haftkleber ist besonders bevorzugt eine Polyacrylathaftklebemasse, die ein Polymer umfasst, das in Bezug auf das Polymer

- 79 bis 100 Gew.-% Acrylsäureester und/oder Methacrylsäureester und/oder deren freie Säuren mit der Formel $CH_2=C(R^3)(COOR^4)$, wobei $R^3$ H oder $CH_3$ darstellt und $R^4$ H oder Alkylketten mit 1 bis 30 C-Atomen darstellt, und
- 0 bis 30 Gew.-% olefinisch ungesättigte Monomere mit funktionellen Gruppen umfasst, wobei sich die Gewichtsangaben auf das Polymer beziehen.

Auch einseitig haftklebend ausgerüstete Haftklebebänder können basierend auf einer Schaumfolie hergestellt werden. In dieser Ausführungsform ist die Ausrüstung mit einem antiadhäsiven Wirkstoff auf der Seite des Trägers, die nicht mit Klebmasse beschichtet wird, möglich.

Von der Erfindung umfasst werden auch erfindungsgemäß beschriebene Klebebänder, die in unmittelbarer oder mittelbarer Nachbarschaft zur Trägerschicht noch mindestens eine weitere Funktionsschicht aufweisen. Beispiele für Funktionsschichten sind Schichten aus Farblack, Primer oder antiadhäsivem Wirkstoff.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

Gemäß einer weiteren vorteilhaften Ausführungsform der Erfindung ist die Oberfläche der Schaumstoffschicht ein- oder beidseitig zumindest partiell, bevorzugt beidseitig und vollflächig, durch Plasmabehandlung, insbesondere Plasmabeschichtung in der Art modifiziert, dass die Affinität zur Haftklebemasse durch eine Erhöhung der Oberflächenenergie gesteigert wird. Die Oberflächenenergie erhöht sich dabei durch Sauerstoffeinlagerung.

Weiterhin kann die Oberfläche der Schaumstoffschicht ein- oder beidseitig zumindest partiell unter Verwendung einer Reagenz, die im Speziellen einen Ätzprozess bewirkt, aufgeraut, sein, um die Oberflächenenergie der Oberfläche zu erhöhen.

Als Reagenz kommen Trichloressigsäure oder Trichloressigsäure in Kombination mit inerten kristallinen Verbindungen, bevorzugt Siliziumverbindungen, besonders bevorzugt $[SiO_2]_x$ zum Einsatz.

Besondere Bedeutung haben erfindungsgemäße Klebebänder in der Verwendung als Klischee-Montagebänder. Da es während des Druckprozesses aufgrund der Vorbehandlung des zu bedruckenden Substrats und der hohen Geschwindigkeiten des Drucks zu einer Erwärmung des Polymerdruckklischees und des darunter befindlichen Klebebands kommt, muss das eingesetzte Klebeband ein konstant hohes Rückstellvermögen auch bei erhöhter Temperatur aufweisen.

Das erfindungsgemäße Klebeband zeichnet sich besonders durch konstantes Rückstellvermögen des Schaumträgers sowie eine hohe Wärmebeständigkeit aus.

Gerade bei Klischee-Montagebänder mit Schaumträger hat es sich besonders vorteilhaft erwiesen, wenn diese eine Stabilisierungsfolie aufweisen, zum Beispiel aus Polyethylenterephthtalat (PET), die eine Dehnung und damit Dickenänderung des Klebebandes bei Montage und Repositionieren des Klebebandes und des Klischees verhindert. Weiterhin dient die Stabilisierungsfolie zur Kraftverteilung während des Druckprozesses. Die Stabilisierungsfolie ist insbesondere über eine HaftklebemassenSchicht auf der Schaumfolie verankert. Da Klischee-Montagebänder doppelseitig klebrig ausgerüstet sein müssen, befindet sich außerdem Klebemasse auf den freien Seiten von Schaumträger und Stabilisierungsfolie.

Da die zum Klebeband gerichtete Rückseite der Klischees ebenfalls aus einer PET-Folie besteht, empfiehlt es sich, die Verankerung der Haftklebemasse auf der Stabilisierungsfolie des Klischeeklebebandes durch eine Vorbehandlung zu unterstützen. Nur so kann mit absoluter Sicherheit bei der Demontage des Klischees ein Umspulen der Haftklebemasse von dem Klischeeklebeband zum Klischee verhindert werden. Geeignet als Methoden zur Vorbehandlung sind die Coronavorbehandlung und/oder ein Vorstrich auf die Folie, besonders geeignet zur Vorbehandlung ist ein Ätzprozess. Durch diesen Ätzprozess können sehr gute Ergebnisse für die Klebmassen-Verankerung erhielt werden, wenn als Reagenz Trichloressigsäure ($Cl_3C\text{-}COOH$) oder Trichloressigsäure in Kombination mit inerten kristallinen Verbindungen, bevorzugt Siliziumverbindungen, besonders bevorzugt $[SiO_2]_x$, eingesetzt werden.

Vorzugsweise hat die Folie aus PET eine Dicke von 5 µm bis 500 µm, bevorzugt 5 µm bis 60 µm, ganz besonders bevorzugt 23 µm.

Der Herstellungsprozess der PE-Schaumfolien sowie die Eigenschaften des Endprodukts sind erfahrungsgemäß stark vom eingesetzten PE-Rohstoff abhängig. Zur Stabilisierung der Schaumfolie ist eine Vernetzung des Polyethylens vor der Schäumung unbedingt notwendig, beispielsweise durch UV-, bevorzugt durch Elektronenstrahlen. Eine ungleichmäßige Vernetzung führt zu Dickenschwankungen in der geschäumten Folie. Für den Fachmann überraschend ergibt sich nach der Expansion des erfindungsgemäßen multi-Blockcopolymers eine sehr konstante Dicke mit Dickentoleranzen von höchstens ± 15 % sowie eine glatte Oberfläche der Schaumfolienbahn. Diese bemerkenswerte Dickenkonstanz könnte in der engen Molekulargewichtsverteilung des multi-Blockcopolymers und der im Polymer gleichmäßig verteilten Hart- und Weichsegmente begründet sein, wodurch die erreichte Vernetzung sehr gleichmäßig ist.

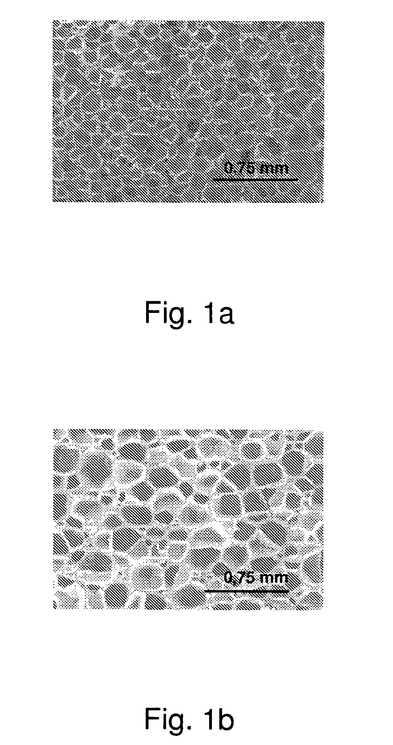

Erfindungsgemäße Klebebänder mit den beschriebenen Schaumbahnen mit einem Gehalt von mindestens 40 % (w/w) eines Ethylen-multi-Blockcopolymers zeigen überraschend ein sehr konstantes Rückstellvermögen auch nach wiederholter Belastung. Das Rückstellvermögen wird messtechnisch als Stauchhärte nach DIN 53577 quantifiziert. Zur Messung der Stauchhärte wird der zu prüfende Schaum viermal um 70 % der ursprünglichen Dicke gestaucht. Die Messwerte bei 40 % Stauchung im ersten und vierten Stauchzyklus werden als Stauchhärte der Schaumfolienbahn angegeben. Ein gutes Rückstellvermögen eines Schaums führt dabei zu einem konstanten Wert der Stauchhärte, d.h. einer geringen Änderung zwischen den Werten des ersten und des vierten Zyklus. Erfindungsgemäße Schaumbahnen aus Ethylen-multi-Blockcopolymer besitzen im Vergleich zu Polyethylen-EVA-Schaumbahnen bei ähnlicher Stauchhärte im ersten Zyklus eine um 30 % höhere Stauchhärte im vierten Stauchzyklus, wobei die Schaumbahnen in einem vergleichbaren Verfahren hergestellt werden. Ein Grund dafür könnte sein, dass die Größe der Zellen eines erfindungsgemäßen Schaums (siehe Figur 1a) deutlich unter der eines Schaums aus Polyethylen und EVA liegt (siehe Figur 1 b). Vor allem bei erhöhter Temperatur oberhalb von 50 °C ist der erfindungsgemäße Schaum dem herkömmlichen in der Stauchhärte deutlich überlegen. Während der Schaum aus Polyethylen und EVA einen deutlichen Abfall der Stauchhärte zeigt, bleibt die Stauchhärte des erfindungsgemäßen Schaums bis zu Temperaturen von 100 °C konstant. Aufgrund der Eigenschaft der vorteilhaften Stauchhärte sind erfindungsgemäße Klebebänder sehr gut für die Anwendung als Klischee-Montageband geeignet.

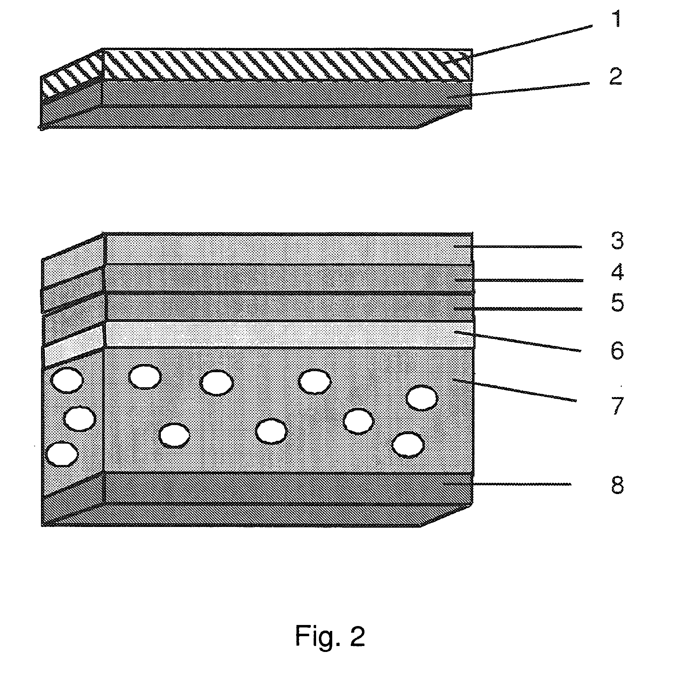

In der Figur 2 ist das erfindungsgemäße Klebeband in einer besonders vorteilhaften Ausführungsform und Verwendung gezeigt, ohne damit die Erfindung unnötig einschränken zu wollen.

Das Klebeband dient zum Verkleben eines Klischees, das sich aus einer PET-Folie 2 und einer Schicht eines Fotopolymers 1 zusammensetzt.

Die Schichten 3 bis 6 bilden ein doppelseitig klebend ausgerüstetes Schaumstoffklischeeklebeband, das dank seines geschäumten Trägers 5 kompressibel ist.

Beginnend von der Seite, mittels derer das Klischee verklebt wird, besteht das Klebeband aus folgenden einzelnen Abschnitten:

3 Haftklebemasse zur Verankerung des Klischees
4 ein Primer zur Verbesserung der Verankerung der ersten Haftklebemasse
5 Stabilisierungsfolie
6 Klebemasse zur Verbindung der Stabilisierungsfolie mit dem geschäumten Träger
7 geschäumter Träger
8 Haftklebemasse zur Verankerung auf dem Druckzylinder

Weiterhin kann das Klebeband ein- oder beidseitig mit einer Abdeckung aus Papier oder aus einer entsprechenden Folie, insbesondere einer beidseitig silikonisierten, versehen sein zwecks Lagerung und bequemer Handhabung während des Gebrauchs.

**Prüfmethoden**

Die Messungen werden, wenn nicht anders angegeben, bei einem Prüfklima von 23 $\pm$ 1 °C und 50 $\pm$ 5 % rel. Luftfeuchte durchgeführt.

Die Dichte der Polymeren wird nach ISO 1183 ermittelt und in $g/cm^3$ ausgedrückt.

Der Kristallitschmelzpunkt ($T_{cr}$) wird mit DSC nach MTM 15902 (Basell-Methode) beziehungsweise ISO 3146 ermittelt.

Die Dicke wird nach DIN 53370 bestimmt, wobei der Taster plan (nicht gewölbt) ist. Bei strukturierten Folien wird jedoch die Dicke vor dem Prägen zugrunde gelegt. Dies ist auch nachträglich über das Flächengewicht (ermittelt nach DIN 53352) und Umrechnung mit der Dichte möglich. Die Prägetiefe ist die Differenz zwischen den Dicken mit und ohne Prägung.

Die Stauchhärte ist definiert als die bei einer festgelegten Verformung der Schaumfolienbahn beim Belastungsvorgang ermittelte Druckspannung in $N/cm^2$. Zur Herstellung eines Prüfkörpers in einer Abmessung von 50 x 50 mm und einer Mindestdicke von 25 mm werden Muster der Schaumfolienbahn mit 50 x 50 mm Seitenlänge kantengerade zu einer Höhe von 25 mm aufgestapelt. Der Prüfkörper wird mittels einer Druckprüfmaschine mit einer Geschwindigkeit von 50 mm/min viermal um 70 % der ursprünglichen Dicke gestaucht (Beginn der Messung bei Erreichen einer Vorkraft von 0,1 kPa). Die Messwerte bei 40 % Stauchung im ersten und vierten Stauchzyklus werden als Stauchhärte der Schaumfolienbahn angegeben.

Folgende Beispiele sollen die Erfindung erläutern, ohne deren Umfang zu beschränken:

**Beispiel 1**

1) Synthese der Katalysatoren für die Herstellung des Ethylen-multi-Blockcopolymeren:

[N-(2,6-di(1-methylethyl)phenyl)amido](2-isopropylphenyl)($\alpha$-naphthalen-2-diyl(6-pyridin-2-diyl)methan))hafnium dimethyl (Katalysator 1) wurde entsprechend WO 03/040195 A1 und WO 04/024740 A1 dargestellt.

Die Synthese von Bis-(1-(2-methylcyclohexyl)ethyl)(2-oxoyl-3,5-di(t-butyl)phenyl)immino) zirconium dibenzyl (Katalysator 2) verlief wie folgt:

a) Synthese von (1-(2-methylcyclohexyl)ethyl)(2-oxoyl-3,5-di(t-butyl)phenyl)imin 2-Methylcyclohexylamin (8,44 mL, 64,0 mmol) wurde in Methanol (90 mL) gelöst. Zu dieser Lösung wurde Di-t-butylsalicaldehyd (10,00 g, 42,67 mmol) gegeben, die Lösung für drei Stunden gerührt und dann für 12 Stunden auf -25 °C gekühlt. Der entstandene gelbe Feststoff wurde abfiltriert, mit kaltem Methanol (2 x 15 mL) gewaschen und anschließend getrocknet. Die Ausbeute betrug 11,20 g.

b) Synthese von Bis-(1-(2-methylcyclohexyl)ethyl)(2-oxoyl-3,5-di(t-butyl)phenyl)immino)zirconium dibenzyl Eine Lösung von (1-(2-methylcyclohexyl)ethyl)(2-oxoyl-3,5-di(t-butyl)phenyl)imin (7,63 g, 23,2 mmol) in Toluol (200 mL) wurde langsam zu $Zr(CH_2Ph)_4$ (5,28 g, 11,6 mmol) in Toluol (600 mL) gegeben. Nach einer Stunde bei 25 °C wurde Toluol (680 mL) zugegeben und eine Lösung mit einer Konzentration von 0,00783 M erhalten.

Als Co-Katalysator wurde eine Mischung aus Methyl-di($C_{14\text{-}18}$-Alkyl)-Ammoniumsalzen des Tetrakis(pentafluorophenyl)borats eingesetzt. Diese Salze wurden durch Reaktion eines Langketten-trialkylamins (Armeen™ M2HT, Akzo-Nobel), HCl und Li[B($C_6F_5$)$_4$] dargestellt, im Wesentlichen wie in US 5,919,983 A1, Beispiel 2, beschrieben.

2) Synthese des Ethylen-multi-Blockcopolymer

Ein Ethylen-multi-Blockcopolymer wurde mittels "chain-shuttling-Polymerisation" folgendermaßen hergestellt: Eine kontinuierliche Polymerisation in Lösung wurde in einem Autoklaven mit integriertem Rührwerk durchgeführt. Ein isoparaffinisches Kohlenwasserstoffgemisch (Isopar™ E von ExxonMobil), Ethylen (1,22 kg/Stunde), 1-Octen (1,63 cm$^3$/min) und Wasserstoff (21,70 cm$^3$/min) wurden in einen temperierbaren Reaktor (4 L) geleitet. Lösungsmittel-Zufluss zum Reaktor und dessen Innendruck waren regelbar. Weiterhin wurden Katalysator 1 (0,07 kg/Stunde), Katalysator 2 (0,06 kg/Stunde), Cokatalysator (0,13 kg/Stunde) und Diethylzink (0,25 kg/Stunde) jeweils in Isopar™ E in den Reaktor geleitet. Der Durchsatz des Isopar™ E betrug insgesamt 11,3 kg/Stunde. Reagenzien und Katalysatoren wurden in der Nähe des Reaktorbodens eingeleitet. Die Polymerisation wurde bei vollständig gefülltem Reaktor und einem Druck von 3,45 MPa bei 120 °C unter heftigem Rühren durchgeführt. Das Polymerisationsprodukt wurde durch Abflüsse in der Nähe des Reaktordeckels ausgeführt. Die Reaktion wurde durch Zugabe einer geringen Menge Wasser sowie Stabilisatoren gestoppt. Das Reaktionsgemisch wurde nach Beendigung der Polymerisation erhitzt, die flüchtigen Bestandteile wurden entfernt. Das Produkt hatte eine Dichte von 0,883 g/cm$^3$, einen Schmelzpunkt von 121 °C und Molmassen von $M_W$ = 118500 g/mol und $M_n$ = 53100 g/mol ($M_W/M_n$ = 2,2).

3) Herstellung der Schaumfolienbahn

Ein Granulat-Gemisch aus 100 Gewichtsteilen des Ethylen-multi-Blockcopolymers, 5 Gewichtsteilen Azodicarbonamid, 0,3 Gewichtsteilen 2,6-Di-t-butyl-p-kresol und einem Gewichtsteil Zinkoxid wurde bei 150 °C zu einer Folienbahn mit einer Breite von 200 mm und einer Dicke von 0,8 mm extrudiert.
Anschließend die Folienbahn mit Elektronenstrahlen mit einer Dosis von 50 kGy bestrahlt, um die Folienbahn zu vernetzen. Die vernetzte Folienbahn wurde dann kontinuierlich durch einen Schäumungsofen geführt, in dem durch Heißluft und IR-Heizung eine Temperatur von 250 °C eingestellt worden war. Aufgrund der vorliegenden Temperatur setzte die Schäumung der Folienbahn ein.
Nach Austritt aus dem Schäumungsofen wurde die Schaumfolienbahn bei Temperaturen zwischen 200 und 250 °C in CD verstreckt. Gleichzeitig wurde die Schaumfolienbahn bei einer Wickelgeschwindigkeit, die höher war als die Geschwindigkeit, mit der die Folienbahn in den Schäumungsofen transportiert wurde (Bahngeschwindigkeit), auch in MD verstreckt. Durch die Verstreckung in CD und MD wurden Breite, Dicke, Expansionsgrad und das Längenverhältnis der Zellen des Schaums eingestellt so wie sie in Tabelle 1 gezeigt werden.

4) Herstellung des Polyacrylats

Ein für radikalische Polymerisationen konventioneller 2-L-Glasreaktor wurde mit 40 g Acrylsäure, 360 g 2-Ethylhexylacrylat und 133 g Aceton/Isopropanol (96 : 4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Firma DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (96 : 4)-Gemisch verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16™, Firma Akzo Nobel) hinzugegeben. Die Reaktion wurde nach 24 h Reaktionszeit abgebrochen und auf Raumtemperatur abgekühlt.
Anschließend wurde das Polyacrylat mit 0,4 Gew.-% Aluminium-(III)-acetylacetonat (3%ige Lösung in Isopropanol) abgemischt, auf einen Feststoffgehalt von 30 % mit Isopropanol verdünnt und dann aus Lösung auf Trennpapier beschichtet. Nach Trocknung für 20 Minuten bei 90 °C betrug der Masseauftrag 50 g/m$^2$.

5) Herstellung des Klebebands

Die Schaumfolienbahn wurde vor der Beschichtung beidseitig coronabehandelt. Der Klebmassenauftrag erfolgte auf beide Seiten des kavitierten Trägermaterials durch Kaschieren von beschichtetem Trennpapier. Anschließend wurde das Trennpapier von einer Seite wieder abgedeckt und das Klebeband zu Stangen gewickelt.

**Beispiel 2**

Ein Granulat-Gemisch aus 100 Gewichtsteilen eines Ethylen-multi-Blockcopolymers (Dow Chemical Company, Handelsname Infuse D9507), 5 Gewichtsteilen Azodicarbonamid, 0,3 Gewichtsteilen 2,6-Di-t-butyl-p-kresol und einem Gewichtsteil Zinkoxid wurde bei 150 °C zu einer Folienbahn mit einer Breite von 200 mm und einer Dicke von 0,8 mm extrudiert.
Der weitere Prozess war identisch mit dem Verfahren in Beispiel 1.

**Vergleichsbeispiel 1**

Ein Granulat-Gemisch aus 20 Gewichtsteilen eines Polyethylens (vertrieben durch Sabic Europe, Handelsname "LDPE 2404AN00", Dichte: 0,925 g/cm$^3$, Schmelzpunkt: 107 °C) und 80 Gewichtsteilen eines Ethylen-Vinylacetat-Copolymers (Ethylen-Gehalt: 18 % (w/w)) sowie Anteilen der Additive wie in Beispiel 1 wurde bei 130 °C zu einer Folienbahn mit den gleichen Abmessungen wie in Beispiel 1 extrudiert.
Der weitere Prozess war identisch mit dem Verfahren in Beispiel 1.
Relevante Prozessparameter sowie die Eigenschaften der resultierenden Schaumfolienbahn sind in Tabelle 1 dargestellt

*Tabelle 1: Prozessparameter und Eigenschaften der Schaumfolienbahnen.*

|  |  | Beispiel 1 | Beispiel 2 | Vergleichsbeispiel 1 |
|---|---|---|---|---|
| Wickelgeschwindigkeit/Bahngeschwindigkeit |  | 2,50 | 2,45 | 2,15 |
| Verstreckgrad | MD | 1,2 | 1,1 | 1,3 |
|  | CD | 2,0 | 2,0 | 2,4 |
| Längenverhältnis der Zellen | MD/CD | 0,53 | 0,50 | 0,45 |
|  | CD/VD | 5,53 | 5,84 | 13,21 |
| Breite (mm) |  | 860 | 860 | 1050 |
| Dicke (mm) |  | 0,6 | 0,6 | 0,6 |
| Vernetzungsgrad (% (w/w) |  | 25 | 24 | 25 |
| Expansionsgrad |  | 4,5 | 4,4 | 4,8 |
| Stauchhärte 1. Zyklus (N/cm$^2$) |  | $32 \pm 9$ | $31 \pm 8$ | $31 \pm 9$ |
| Stauchhärte 4. Zyklus (N/cm$^2$) |  | $30 \pm 10$ | $29 \pm 10$ | $23 \pm 8$ |

Wie sich Tabelle 1 entnehmen lässt, ist die Stauchhärte der Schaumfolienbahnen aus Ethylen-multi-Blockcopolymer (Beispiele 1 und 2) gegenüber der aus Vergleichsbeispiel 1 im 4. Stauchzyklus um 30 % erhöht. Dieser erhöhte Wert ist vorteilhaft, da der für die Schaumfolienbahn aus Vergleichsbeispiel 1 beobachtete Abfall der Stauchhärte zwischen dem 1. und 4. Zyklus um 26 % ausbleibt. Eine konstante Stauchhärte ist für die Verwendung als Klischee-Montageband wichtig, da sich einer Anpassung der Einstellungen der Druckmaschine während des Drucks so erübrigt. Die Arbeit des Druckers wird damit erleichtert. Aufgrund der unterschiedlichen Schmelzpunkte der Polyolefine (Beispiel 1: 121 °C, Vergleichsbeispiel 1: 107 °C) ist die Stauchhärte einer Schaumfolienbahn auf Basis von Ethylen-multi-Blockcopolymeren außerdem temperaturstabiler als die von Schaumfolien aus Polyethylenen oder Polyethylenrandom-Copolymeren oder Blends.

**Patentansprüche**

1. Klebeband aus einem Träger und einer zumindest einseitig auf dem Träger aufgebrachten Klebemassenschicht, wobei der Träger zumindest eine Schaumschicht aus einem Polyolefin basierten Polymer aufweist,
**dadurch gekennzeichnet, dass**
das Polyolefin basierte Polymer ein Ethylen-multi-Blockcopolymer zu einem Anteil von mindestens 40 % (w/w) enthält, wobei das Ethylen-multi-Blockcopolymer besteht aus Hartsegmentblöcken, enthaltend mindestens 95 % (w/w) Ethylen und ein Comonomer, und aus Weichsegmentblöcken, enthaltend Ethylen und ein Comonomer, wobei der Anteil an Comonomer in den Weichsegmentblöcken zwischen 10 und 20 Mol-% liegt.

**2.** Klebeband nach Anspruch 1,
**dadurch gekennzeichnet, dass**
die Hartsegmentblöcke einen Kristallitschmelzpunkt von mindestens 110 °C aufweisen.

**3.** Klebeband nach Anspruch 1 oder 2,
**dadurch gekennzeichnet, dass**
das Ethylen-multi-Blockcopolymer durch "chain-shuttling-Polymerisation" erzeugt wird.

**4.** Klebeband nach zumindest einem der Ansprüche 1 bis 3,
**dadurch gekennzeichnet, dass**
das Comonomer ein $C_3$- bis $C_{10}$-Olefin, vorzugsweise ein $C_8$-Olefin ist.

**5.** Klebeband nach zumindest einem der vorherigen Ansprüche,
**dadurch gekennzeichnet, dass**
die Schaumschicht erzeugt wird durch Extrusion des insbesondere physikalisch vernetzten Polyolefin basierten Polymers und eines Treibmittels zu einer expandierbaren Folienbahn und anschließender Expansion dieser Folienbahn.

**6.** Klebeband nach zumindest einem der vorherigen Ansprüche,
**dadurch gekennzeichnet, dass**

• der Grad der Vernetzung des vernetzten Polyolefin basierten Polymers der Schaumschicht 5 bis 60 % (w/w),
• das Längenverhältnis der Zellen in der Schaumschicht (durchschnittlicher Zelldurchmesser in MD/durchschnittlicher Zelldurchmesser in CD) 0,25 bis 1 und/oder
• das Längenverhältnis der Zellen in der Schaumschicht (durchschnittlicher Zelldurchmesser in CD/durchschnittlicher Zelldurchmesser in VD) 2 bis 18 beträgt.

**7.** Klebeband nach zumindest einem der vorherigen Ansprüche,
**dadurch gekennzeichnet, dass**
die Schaumschicht eine Dicke in VD zwischen 200 und 3000 $\mu$m, besonders bevorzugt zwischen 200 und 2000 $\mu$m, und/oder eine Dichte von 30 bis 300 kg/m$^3$ aufweist.

**8.** Klebeband nach zumindest einem der vorherigen Ansprüche,
**dadurch gekennzeichnet, dass**
es sich bei der zumindest einseitig auf dem Träger aufgebrachten Klebemassenschicht um eine Haftklebemasse handelt, gewählt aus der Gruppe bestehend aus Acrylatklebern, Silikonklebern, Polyurethanklebern und Kautschukklebern.

**9.** Klebeband nach zumindest einem der vorherigen Ansprüche,
**dadurch gekennzeichnet, dass**
die Klebemasseschicht eine Dicke von höchstens 100 $\mu$m, bevorzugt höchstens 50 $\mu$m hat

**10.** Klebeband nach zumindest einem der vorherigen Ansprüche,
**dadurch gekennzeichnet, dass**
die Haftklebemassenschicht aus einer Polyacrylathaftklebemasse besteht und ein Polymer umfasst, das im Bezug auf das Polymer

(b1) 79 bis 100 Gew.-% Acrylsäureester und/oder Methacrylsäureester und/oder deren freie Säuren mit der Formel $CH_2=C(R^3)(COOR^4)$, wobei $R^3$ H oder $CH_3$ darstellt und $R^4$ H oder Alkylketten mit 1 bis 30 C-Atomen darstellt, und
(b2) 0 bis 30 Gew.-% olefinisch ungesättigte Monomere mit funktionellen Gruppen umfasst.

**11.** Klebeband nach zumindest einem der vorherigen Ansprüche,
**dadurch gekennzeichnet, dass**
die Trägerschicht neben der Schaumschicht mindestens eine weitere Funktionsschicht aufweist.

**12.** Verwendung eines Klebebands nach zumindest einem der vorherigen Ansprüche als Klischee-Montageband in der Druckindustrie.

**Claims**

1. Adhesive tape comprising a carrier and a layer of adhesive applied on at least one side to the carrier, the carrier having at least one foam layer comprising a polyolefin-based polymer,
   **characterized in that**
   the polyolefin-based polymer contains an ethylene multi-block copolymer in a fraction of at least 40% (w/w), the ethylene multi-block copolymer being composed of hard segment blocks, containing at least 95% (w/w) of ethylene and a comonomer, and of soft segment blocks, containing ethylene and a comonomer, the fraction of comonomer in the soft segment blocks being between 10 and 20 mol%.

2. Adhesive tape according to Claim 1,
   **characterized in that**
   the hard segment blocks have a crystallite melting point of at least 110°C.

3. Adhesive tape according to claim 1 or 2,
   **characterized in that**
   the ethylene multi-block copolymer is produced by chain-shuttling polymerization.

4. Adhesive tape according to at least one of claims 1 to 3,
   **characterized in that**
   the comonomer is a $C_3$ to $C_{10}$ olefin, preferably a $C_8$ olefin.

5. Adhesive tape according to at least one of the preceding claims,
   **characterized in that**
   the foam layer is produced by extruding the polyolefin-based polymer, more particularly a physically crosslinked polyolefin-based polymer, and a blowing agent to form an expandable film web and subsequently expanding this film web.

6. Adhesive tape according to at least one of the preceding claims, **characterized in that**

   • the degree of crosslinking of the crosslinked polyolefin-based polymer of the foam layer is 5% to 60% (w/w),
   • the length ratio of the cells in the foam layer (average cell diameter in MD/average cell diameter in CD) is 0.25 to 1 and/or
   • the length ratio of the cells in the foam layer (average cell diameter in CD/average cell diameter in VD) is 2 to 18.

7. Adhesive tape according to at least one of the preceding claims,
   **characterized in that**
   the foam layer has a thickness in VD between 200 and 3000 $\mu$m, more preferably between 200 and 2000 $\mu$m, and/or a density of 30 to 300 kg/m$^3$.

8. Adhesive tape according to at least one of the preceding claims,
   **characterized in that**
   the layer of adhesive applied on at least one side to the carrier is a pressure-sensitive adhesive selected from the group consisting of acrylate adhesives, silicone adhesives, polyurethane adhesives and rubber adhesives.

9. Adhesive tape according to at least one of the preceding claims,
   **characterized in that**
   the layer of adhesive has a thickness of not more than 100 $\mu$m, preferably not more than 50 $\mu$m.

10. Adhesive tape according to at least one of the preceding claims,
    **characterized in that**
    the layer of pressure-sensitive adhesive is composed of a polyacrylate pressure-sensitive adhesive and comprises a polymer comprising in relation to the polymer

    (b1) 79% to 100% by weight of acrylic esters and/or methacrylic esters and/or their free acids with the formula $CH_2=C(R^3)(COOR^4)$, where $R^3$ is H or $CH_3$ and $R^4$ is H or alkyl chains having 1 to 30 C atoms, and
    (b2) 0% to 30% by weight of olefinically unsaturated monomers having functional groups.

**11.** Adhesive tape according to at least one of the preceding claims,
**characterized in that**
the carrier layer has in addition to the foam layer at least one further functional layer.

**12.** Use of an adhesive tape according to at least one of the preceding claims as plate mounting tape in the printing industry.

**Revendications**

**1.** Bande adhésive composée d'un support et d'une couche de masse adhésive appliquée au moins sur une face du support, où le support présente au moins une couche de mousse en un polymère à base de polyoléfine, **caractérisée en ce que** le polymère à base d'une polyoléfine contient un copolymère à blocs multiples d'éthylène en une proportion d'au moins 40% (P/P), où le copolymère à blocs multiples d'éthylène est constitué par des blocs de segments durs, contenant au moins 95% (P/P) d'éthylène et un comonomère et des blocs de segments mous contenant de l'éthylène et un comonomère, où la proportion de comonomère dans les blocs de segments mous est située entre 10 et 20% en mole.

**2.** Bande adhésive selon la revendication 1, **caractérisée en ce que** les blocs de segments durs présentent un point de fusion des cristaux d'au moins 110°C.

**3.** Bande adhésive selon la revendication 1 ou 2, **caractérisée en ce que** le copolymère à blocs multiples d'éthylène est produit par une polymérisation avec transfert de chaînes ("chain-shuttling").

**4.** Bande adhésive selon au moins l'une quelconque des revendications 1 à 3, **caractérisée en ce que** le comonomère est une oléfine en $C_3$-$C_{10}$, de préférence une oléfine en $C_8$.

**5.** Bande adhésive selon au moins l'une quelconque des revendications précédentes, **caractérisée en ce que** la couche de mousse est produite par extrusion du polymère à base de polyoléfine, en particulier réticulé par voie physique, et d'un agent gonflant en une bande de feuille expansible et expansion consécutive de cette bande en feuille.

**6.** Bande adhésive selon au moins l'une quelconque des revendications précédentes, **caractérisée en ce que**

   - le degré de réticulation du polymère à base de polyoléfine, réticulé de la couche de mousse est de 5 à 60% (P/P),
   - le rapport des longueurs des cellules dans la couche de mousse (diamètre moyen des cellules dans le sens de la machine/diamètre moyen des cellules dans le sens transversal) est de 0,25 à 1 et/ou
   - le rapport des longueurs des cellules dans la couche de mousse (diamètre moyen des cellules dans le sens transversal/diamètre moyen des cellules dans le sens vertical) est de 2 à 18.

**7.** Bande adhésive selon au moins l'une quelconque des revendications précédentes, **caractérisée en ce que** la couche de mousse présente une épaisseur dans le sens vertical entre 200 et 3000 $\mu$m, de manière particulièrement préférée entre 200 et 2000 $\mu$m, et/ou une densité de 30 à 300 kg/m$^3$.

**8.** Bande adhésive selon au moins l'une quelconque des revendications précédentes, **caractérisée en ce qu'**il s'agit, pour la couche de masse adhésive appliquée sur au moins une face du support, d'une masse autoadhésive, choisie dans le groupe constitué par les adhésifs à base d'acrylate, de silicone, de polyuréthane et de caoutchouc.

**9.** Bande adhésive selon au moins l'une quelconque des revendications précédentes, **caractérisée en ce que** la couche de masse adhésive présente une épaisseur d'au plus 100 $\mu$m, de préférence d'au plus 50 $\mu$m.

**10.** Bande adhésive selon au moins l'une quelconque des revendications précédentes, **caractérisée en ce que** la couche de masse autoadhésive est constituée par une masse autoadhésive à base de polyacrylate et comprend un polymère qui est composé de, par rapport au polymère

   (b1) 79 à 100% en poids d'ester de l'acide acrylique et/ou d'ester de l'acide méthacrylique et/ou leurs acides libres de formule $CH_2=C(R^3)(COOR^4)$, où $R^3$ représente H ou $CH_3$ et $R^4$ représente H ou des chaînes alkyle comprenant 1 à 30 atomes de carbone, et

(b2) 0 à 30% en poids de monomères oléfiniquement insaturés avec des groupes fonctionnels.

11. Bande adhésive selon au moins l'une quelconque des revendications précédentes, **caractérisée en ce que** la couche support présente, outre la couche de mousse, au moins une autre couche fonctionnelle.

12. Utilisation d'une bande adhésive selon au moins l'une quelconque des revendications précédentes comme bande de montage de clichés dans l'industrie de l'imprimerie.

Fig. 1a

Fig. 1b

1

2

3

4

5

6

7

8

Fig. 2

**EP 2 025 506 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0491253 A1
- EP 1645589 A1
- WO 2005090427 A1

- WO 03040195 A1
- WO 04024740 A1
- US 5919983 A1